# EUROPÄISCHE PATENTANMELDUNG

(11) **EP 2 520 146 A1**
(43) Veröffentlichungstag der Anmeldung: **07.11.2012**
(21) Anmeldenummer: 12166811.5
(22) Anmeldetag: 04.05.2012
(51) Int. Cl.: A01B 63/14

(54) **Gezogenes landwirtschaftliches Gerät**

(30) Priorität: 06.05.2011 DE 102011050195
(71) Anmelder: Horsch Maschinen GmbH, 92421 Schwandorf (DE)
(72) Erfinder: Pirkenseer, Michael, 92287 Schmidmühlen (DE)
(74) Vertreter: Benninger, Johannes

(57) **Zusammenfassung**

Die Erfindung betrifft ein gezogenes, an eine Zugmaschine angehängtes landwirtschaftliches Gerät (10) mit einem Fahrwerk und einer Zugdeichsel (22), welche jeweils mit hydraulischen Aushubvorrichtungen zum Heben und Senken des Gerätes (10) ausgestattet sind. Die Zugdeichsel (22) ist mit dem Zugfahrzeug über dessen Unterlenker und/oder über einen Anhängepunkt verbindbar oder koppelbar. Das Gerät (10) weist in einem vorderen, zum Zugfahrzeug bzw. der Zugdeichsel (22) gerichteten Bereich Stützeinrichtungen zum Einhalten eines vorgebbaren und/oder variablen Abstandes zur Bodenoberfläche auf. Die Zugdeichsel (22) ist mit dem Gerät (10) über wenigstens ein Gelenk (24) und die davon beabstandete hydraulische Aushubvorrichtung (26) verbunden, die in einer Arbeitsposition im Feld ein(e) den Koppelpunkt (32) zum Zugfahrzeug belastendes Moment und/oder belastende Kraft (36) erzeugt, indem eine Hebenseite der Aushubvorrichtung (26) der Zugdeichsel (22) dauerhaft, insbesondere während Anhebe- und Absenk-Zyklen mit hydraulischem Druck beaufschlagt ist.

## Beschreibung

Die vorliegende Erfindung betrifft ein gezogenes, an eine Zugmaschine angehängtes landwirtschaftliches Gerät mit den Merkmalen des unabhängigen Anspruch 1, insbesondere eine Bodenbearbeitungsvorrichtung.

In der Landwirtschaft wird eine Vielzahl von verschiedenen Bodenbearbeitungsgeräten eingesetzt. Eine häufig verwendete Bauart umfasst ein einen angehängten Rahmen mit eigenem Fahrwerk und großer Arbeitsbreite, der mittels einer Zugmaschine über den Acker gezogen wird. Solche Bodenbearbeitungsgeräte können bspw. mit Lockerungs- und/oder Schneidwerkzeugen, bspw. als sog. Kurzscheiben- oder Zinkeneggen o. dgl. ausgebildet sein. Zum Transport werden meist Teile des Rahmens um horizontale Längsachsen verschwenkt, so dass die Baubreite der Maschine auf ein für die Straßenfahrt zulässiges Maß reduziert werden kann.

Dadurch, dass diese relativ schweren Geräte in moderner Bauart sehr große Arbeitsbreiten aufweisen, entsteht ein zunehmender Zugkraftbedarf bei der Zugmaschine. Die Zugmaschinen heutiger Bauart können zwar die hierfür geforderte Zugleistung meist problemlos erbringen, stoßen aber bei manchen Böden und bei bestimmten Feuchtigkeitsparametern oftmals an ihre Traktionsgrenzen. Um diesen Problemen abzuhelfen, sind unterschiedliche Möglichkeiten bekannt, um Gewicht vom Gerät auf ein Zugfahrzeug zu übertragen, um dessen Traktion zu verbessern. So können bspw. am Heckbereich des Zugfahrzeuges zusätzliche Gewichte angebracht werden, wodurch die Traktion an der Hinterachse verbessert werden kann. Auch ist es bekannt, über einen Angriffspunkt oberhalb der Heckanhängung vom Gerät zum Zugfahrzeug eine Zugkraft aufzubringen. Durch diese Hebelwirkung kann Gewicht vom Gerät auf den Anhängepunkt gehebelt werden, so dass ein Teil der Last effektiv vom Gerät auf das Zugfahrzeug übertragen werden kann. Solche Maßnahmen können sowohl bei Bodenbearbeitungsgeräten als auch bei Anhängern wie bspw. angehängten Gülletankwagen durchgeführt werden.

Bei Bodenbearbeitungsgeräten mit starrer Zugdeichsel ist es möglich, mittels einer entsprechenden Einstellung der Anlenk- und Verbindungspunkte am Heck des Zugfahrzeuges das angehängte Gerät in der Tiefe zu führen, wodurch gleichzeitig das Gewicht sowie der Unterzug in Arbeit auf das Zugfahrzeug übertragen wird. Probleme können hierbei jedoch durch Wank- und Aufbaubewegungen des Zugfahrzeuges entstehen, wodurch die Tiefenführung bei unebenen Flächen nicht präzise ausfällt.

Weiterhin ist es möglich, die Kraftverteilung im Zugfahrzeug dadurch zu beeinflussen, dass eine zusätzliche Druckkraft zwischen einem Punkt oberhalb des Anhängepunktes am Zugfahrzeug und Gerät aufgebracht wird. Mit einer solchen Maßnahme wird jedoch nur eine Hebelwirkung um eine Querachse des Zugfahrzeuges erzeugt, so dass sich diese zusätzliche Druckkraft nur auf die Gewichtsverteilung des Zugfahrzeuges auswirken kann, ohne dass dabei die Last auf die Hinterachse des Zugfahrzeuges tatsächlich erhöht wird.

Schließlich sieht eine weitere Möglichkeit der Traktionsverbesserung vor, von der Zugdeichsel des Gerätes über den Aushubzylinder der Zugdeichsel auf den Anhängepunkt des Zugfahrzeuges zu drücken. Hierbei können bspw. zusätzliche Druckspeicher verwendet werden, die nach jedem Zyklus des Hebens oder Senkens manuell gefüllt werden müssen. Hierdurch entsteht jedoch ein zusätzlicher manueller Steuerungsaufwand für den Fahrer, was sowohl dessen Aufmerksamkeit beansprucht als auch sein manuelles Eingreifen erfordert. Zudem wird i.d.R. ein weiteres hydraulisches Steuergerät am Zugfahrzeug benötigt, was den Installations- und Wartungsaufwand in nachteiliger Weise erhöht. Zudem sind solche Systeme grundsätzlich fehlerbehaftet und bieten nicht den Grad an Bedienungskomfort und Betriebssicherheit, die bei modernen landwirtschaftlichen Geräten zu fordern sind.

Eine Variante eines Bodenbearbeitungsgeräts mit variabler Lastverteilung in Gestalt eines sog. Starrdeichselgerätes ist aus der DE 10 2008 032 592 A1 bekannt. Mittels eine zusätzlichen Energiespeichers zwischen einer Anbauvorrichtung und der Deichsel des Bodenbearbeitungsgerätes sowie einer damit gekoppelten Einrichtung zur Erzeugung einer Zugkraft im Oberlenker des Traktordreipunktgestänges soll die Traktion der Zugmaschine erhöht werden können. Zu diesem Zweck wird einerseits Gewicht von Traktorvorderachse auf die Traktorhinterachse übertragen. Zudem wird auch Gewicht vom Gerät auf die Traktorhinterachse übertragen, so dass insgesamt der Schlupf an der Hinterachse des Zugfahrzeugs reduziert werden kann. Als Energiespeicher wird ein Hydraulikzylinder mit variierbarem Systemdruck vorgeschlagen, der mit dem Hydrauliksystem des Zugfahrzeuges gekoppelt sein kann. Durch die Variation des Systemdrucks soll es ermöglicht werden, während der Arbeit die Gewichtsübertragung vom Gerät auf den Traktor bzw. von der Vorderachse auf die Hinterachse entsprechend den Anforderungen einstellen zu können.

Als nachteilig an diesen sog. Starrdeichselgeräten kann jedoch die unzureichende Bewegungs- und Einstellmöglichkeit der Arbeitstiefe empfunden werden, da sich das Gerät heckseitig über die mitlaufenden Stützräder abstützt, während es frontseitig mit seiner gesamten Last auf der Heckanlenkung des Zugfahrzeuges aufliegt und somit bei allen Tiefenbewegungen gleichzeitig Einfluss auf die Belastung der Traktorhinterachse und somit auch auf deren Traktion nimmt.

Demgegenüber besteht ein vorrangiges Ziel der vorliegenden Erfindung darin, bei einem gezogenen landwirtschaftlichen Gerät mit sog. schwimmender Zugdeichsel, das bspw. ein Bodenbearbeitungsgerät sein kann, durch geeignete Einrichtungen und/oder Steuerungsmaßnahmen die Traktion des Zugfahrzeuges zu verbessern. Hierbei soll es ermöglicht werden, einen definierbaren Anteil des Gerätegewichts auf das Zugfahrzeug zu übertragen, um dessen Traktion an der Hinterachse zu verbessern.

Dieses Ziel wird mit dem Gegenstand des unabhängigen Patentanspruchs erreicht. Merkmale vorteilhafter Weiterbildungen der Erfindung ergeben sich aus den abhängigen Ansprüchen.

Das Ziel wird bei einem gezogenen landwirtschaftlichen Gerät durch eine entsprechende Steuerung einer Aushubvorrichtung einer Zugdeichsel dadurch gelöst, dass eine sog. Hebenseite dauerhaft mit Druck beaufschlagt wird, wodurch ein belastendes Moment auf einen Koppelpunkt zur Zugmaschine des Geräts erzeugt wird, was wiederum die Traktion an der dem Gerät nahe liegenden hinteren Antriebsachse der Zugmaschine erhöht. Der an der Zugdeichsel ansetzende Zugdeichselzylinder ist insbesondere bei den Anhebe- und Absenk-Zyklen dauerhaft mit hydraulischem Druck beaufschlagt. Da solche gezogenen Geräte in einem vorderen, in Nähe der Zugdeichsel liegenden Bereich zwangsläufig mit Stützrädern versehen sein müssen, die einen Teil der Last des Gerätes tragen und gleichzeitig ggf. zu dessen Tiefeneinstellung während einer Feldfahrt vorgesehen sein können, ist die Zugdeichsel selbst normalerweise entlastet. Die Zugdeichsel wird deshalb auch als sog. schwimmende Zugdeichsel bezeichnet. Das Zugfahrzeug trägt hierbei auch keine nennenswerte Stützlast, sondern übernimmt lediglich Zugaufgaben. Die Zugdeichsel mit ihrem Aushubzylinder wird lediglich dazu genutzt, das Gerät anzuheben bzw. abzusenken. Während der normalen Arbeitsposition bei der Feldfahrt "schwimmt" die Zugdeichsel und stützt sich nicht auf dem Zugfahrzeug ab. Somit wird dort kein Gewicht über den Unterzug auf das Zugfahrzeug übertragen, wodurch auch keine traktionserhöhenden Maßnahmen am Schlepper erzeugt werden können, was u.U. und bei schweren und/oder nassen Böden zu Traktionsproblemen führen kann. Hier setzt die Erfindung an, indem sie durch die Steuerung der als Stützeinrichtung fungierenden Zugdeichsel des gezogenen landwirtschaftlichen Gerätes zumindest einen definierbaren Teil des Gerätegewichtes bzw. Unterzuges des Bodenbearbeitungsgerätes auf das Zugfahrzeug überträgt, um dessen Traktion effektiv zu erhöhen.

Die Erfindung löst diese technischen Aufgaben durch die Übertragung eines Moments bzw. die Schaffung einer Kraftübertragung vom Gerät auf das Zugfahrzeug über die Zugdeichsel, indem deren Aushubzylinder diese Kraft überträgt, wobei dieser Vorgang mittels einer entsprechenden hydraulischen Verschaltung und/oder Ansteuerung automatisch, unabhängig von der Arbeitstiefe des Gerätes und unabhängig vom eingesetzten Zugfahrzeug erfolgt. Mit einer automatischen Steuerung ist insbesondere eine sog. "Einhebelbedienung" gemeint, bei der der Fahrer nur das Heben oder Senken mittels eines einzigen Betätigungsvorganges, vorzugsweise mit Hilfe eines bereits vorhandenen Steuergerätes durchführen kann. In der Regel ist somit kein zusätzliches Steuergerät erforderlich. Die Einhebelbedienung kann insbesondere bei jedem Wendevorgang (Heben-Senken Zyklus) durchgeführt werden. Vorteilhaft ist zudem, dass diese Steuerung völlig unabhängig von der benötigten Arbeitstiefe des Gerätes sowie auch unabhängig vom Zugfahrzeug durchführbar ist, da sie nur wenige Bauteile benötigt und im Wesentlichen auf den Hydraulikteil der Zugdeichsel beschränkt ist. Zudem ist die erfindungsgemäße Steuerung als technisch sicher anzusehen, denn der Hubzylinder ist hydraulisch derart geschalten, dass er wie eine Druckfedern wirkt und in Arbeit sich problemlos bewegen kann. Auf diese Weise kann die Einstellung des Geräts auch Bodenunebenheiten ausgleichen, da es sich während der Arbeit in der Höhe angleichen kann.

So umfasst die vorliegende Erfindung ein nahezu beliebig ausgestaltetes und für unterschiedlichste Zwecke einsetzbares gezogenes landwirtschaftliches Gerät, das mit einem Fahrwerk und einer Zugdeichsel ausgestattet ist. Sowohl das Fahrwerk als auch die Zugdeichsel sind jeweils mit hydraulischen Aushubvorrichtungen zum Heben und Senken des Gerätes ausgestattet. Da es sich um ein gezogenes und nicht um ein aufgesatteltes Gerät handelt, ist die Zugdeichsel mit dem Zugfahrzeug über dessen beide Unterlenker und/oder über einen Anhängepunkt verbunden bzw. verbindbar. Zudem weist das Gerät in einem vorderen, zum Zugfahrzeug bzw. der Zugdeichsel gerichteten Bereich Stützeinrichtungen zum Einhalten eines vorgebbaren und/oder variablen Abstandes zur Bodenoberfläche auf. Diese Stützeinrichtungen sind normalerweise durch Stützräder gebildet, welche die Zugdeichsel in einer Arbeitsposition im Feld entlasten, so dass die Zugdeichsel in Arbeitsposition im Feld keine Tiefenführungsfunktion des Gerätes übernimmt. Schließlich ist die Zugdeichsel mit dem Gerät über wenigstens ein Gelenk und die davon beabstandete hydraulische Aushubvorrichtung verbunden, die in einer Arbeitsposition im Feld ein den Koppelpunkt zum Zugfahrzeug belastendes Moment erzeugt, was die Hinterachsbelastung für das Zugfahrzeug und damit dessen Traktion erhöht.

Dadurch, dass eine sog. Hebenseite der Aushubvorrichtung der Zugdeichsel dauerhaft mit hydraulischem Druck beaufschlagt ist, ist für eine permanente Vorspannung der Aushubvorrichtung während ihres Betriebes gesorgt, die für eine zusätzliche Belastung des Koppelpunktes zur Zugmaschine - wahlweise an deren Kraftheber oder an einem Zugmaul o. dgl. - und damit für deren heckseitige Belastung sorgt. Dadurch wird die Hinterachslast für die Zugmaschine erhöht, was wiederum die Traktion bei der schweren Zugarbeit auf dem Feld verbessert.

Vorzugsweise erfolgt die dauerhafte Druckbeaufschlagung der Hebenseite des Zugdeichselaushubzylinders bei jedem Zyklus des Hebens oder Senkens auf weitgehend automatischem Weg und in Koppelung mit der Hydraulik des Zugfahrzeugs. So kann der Zylinder gleichzeitig durch das Steuergerät für das Heben/Senken des Zugfahrzeuges hydraulisch druckbeaufschlagt werden, so dass kein weiteres Steuergerät notwendig erforderlich ist und eine Einhebelbedienung durch den Fahrer der Zugmaschine ermöglicht ist.

Weiterhin kann es von Vorteil sein, wenn die Höhe der dauerhaften Druckbeaufschlagung der Hebenseite manuell einstellbar ist. Wahlweise kann die dauerhafte Druckbeaufschlagung der Hebenseite automatisch durch sinnvolle Parameter und daraus resultierende Regelkreise einstellbar sein, wobei die Parameter sinnvollerweise durch die Masse des gezogenen Gerätes und die erforderliche Zugkraft für die Zugmaschine mitbestimmt werden.

Wahlweise kann wenigstens ein weiterer Hydraulikzylinder, der für das Heben und Senken der Fahrwerksteile, insbesondere der hinteren, ggf. auch der vorderen Stützräder verantwortlich ist, mit dem Hydraulikzylinder der Zugdeichsel, mit der diese hydraulisch vorgespannt wird, gekoppelt sein. Normalerweise jedoch ist keine Verschaltung der vorderen Stützräder mit dem Zugdeichselzylinder vorgesehen. Die in Nähe der Zugdeichsel angeordneten vorderen Stützräder können allenfalls mit den heckseitig angeordneten Packerelementen gekoppelt sein, bspw. durch eine hydraulische Verschaltung, um die Arbeitstiefe des Bodenbearbeitungsgeräts im Feld einstellen zu können. Allerdings ist diese Koppelung lediglich optional zu verstehen. Auch kann diese Höheneinstellung ggf. auf mechanischem Wege mittels mechanischen Stellteilen erfolgen.

Der Zugdeichselzylinder ist dagegen mit dem Fahrwerk gekoppelt, insbesondere mit hydraulischen Hebe- und Senkzylindern, die ein Anheben der gesamten Maschine für die Straßenfahrt oder ein Absenken des Geräts am Feldrand für die Bodenbearbeitung ermöglichen. Somit können die Hydraulikkreise für das Heben und Senken des Fahrwerks und für die Druckbeaufschlagung des Zugdeichselzylinders hydraulisch verbunden sein, wobei der/die Fahrwerkszylinder jedoch hebenseitig nicht dauernd druckbeaufschlagt sind.

Weiterhin kann bei einer Variante des gezogenen landwirtschaftlichen Gerätes vorgesehen sein, dass bei einem Absenken der Zugdeichsel eine höhere Kraft und damit ein größerer hydraulischer Druck auf der Senkenseite des Zugdeichselzylinders aufgebracht wird als die dauerhaft eingestellte Kraft der Hebenseite, wodurch die Vorspannung der Zugdeichsel unter allen Betriebsbedingungen aufrecht erhalten werden kann.

Prinzipiell kann der Zugdeichselaushubzylinder in beliebiger Richtung eingebaut werden; er kann bezüglich der Heberichtung sowohl als Druck- als auch als Zugzylinder eingebaut sein. Der zur Verfügung stehende Platz begünstigt jedoch normalerweise einen Einbau als Druckzylinder, da oberhalb der Zugdeichsel mehr Raum zur Verfügung steht als unterhalb, wo je nach Einbausituation die Bodenfreiheit reduziert sein könnte.

Vorzugsweise kann die dauerhafte Druckbeaufschlagung der Hebenseite des Zugdeichselaushubzylinders zur Änderung der Belastungseigenschaften, zu Wartungszwecken oder auch zur problemlosen Transport- oder Straßenfahrt jederzeit auch deaktiviert werden.

Das erwähnte gezogene landwirtschaftliche Gerät kann grundsätzlich beliebiger Art sein, wobei sich die Erfindung besonders vorteilhaft bei Bodenbearbeitungseinrichtungen wie Scheibeneggen, Zinkeneggen o. dgl. auswirken kann, da diese gezogenen Geräte je nach Bodenverhältnissen eine sehr hohe Zugkraft benötigen können.

An dieser Stelle sollen nochmals einige wichtige Aspekte der vorliegenden Erfindung zusammengefasst werden. Die als Ziel der Erfindung zu erreichende Traktionsverbesserung eines Zugfahrzeuges einer Zugkombination mit einem angehängten landwirtschaftlichen Gerät lässt sich durch folgendes Prinzip bzw. durch folgende hydraulische Schaltung zwischen einem hydraulisch in der Höhe verstellbaren Fahrwerk des gezogenen Gerätes und einem an einer Zugdeichsel angeordneten Zugdeichselzylinder erzielen. Dabei ist der Zugdeichselzylinder hebenseitig ständig über alle Zyklen (Heben, Senken, Arbeit) druckbeaufschlagt. Dadurch resultiert eine dauerhafte Kraft hebenseitig, die das Gerät heben will, und dadurch dauerhaft Gewicht auf das Zugfahrzeug überträgt, nämlich durch die daraus resultierende Abstützung auf dem Zugfahrzeug. Diese dauerhafte Kraft, die hebenseitig wirkt, ist normalerweise auf ein festgelegtes Maximum eingestellt, um gegen diese Kraft das Gerät bedarfsweise mit einer höheren Kraft senkenseitig absenken zu können. Diese Kräfte können durch Wahl der Zylinderverhältnisse und/oder Druckeinstellungen bestimmt werden. Dadurch, dass die Kraft beim Senken die dauerhaft eingestellte Kraft auf der Hebenseite übersteigt, kann das Gerät auch abgesenkt werden, ggf. bei einer sogar negativen resultierenden Stützlast. Die hydraulische Druckbeaufschlagung auf der sog. Senkenseite erfolgt, um die Zugdeichsel abzusenken; danach wird das Steuergerät des Zugfahrzeuges für die Feldfahrt bzw. die Arbeitsfahrten drucklos geschaltet. Dies lässt sich mit nur einem Steuergerät erreichen, das eine sog. "Einhebelbedienung" ermöglicht, ohne dass für die Steuerungseinstellungen ein zweites Steuergerät erforderlich wäre.

Eine weitere Ausstattungsoption kann darin bestehen, dass die höhenverstellbaren Fahrwerksteile, bspw. die Hebe- und Senkzylinder für die hinteren Räder, die das Fahrwerk bilden können, mit einer Tiefenführungsverstellung für die Feldfahrt versehen sind. Wenn bspw. keine Packerelemente am Heck angebaut sind, kann das höhenverstellbare Fahrwerk grundsätzlich auch zur Tiefenführung im Feld genutzt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht eines gezogenen landwirtschaftlichen Bodenbearbeitungsgerätes.
Fig. 2 zeigt in einer perspektivischen Detailansicht eine mit einem hydraulisch betätigbaren Zugdeichselzylinder ausgestattete Zugdeichsel des Bodenbearbeitungsgerätes gemäß Fig. 1.
Fig. 3 zeigt eine schematische Seitenansicht des Bodenbearbeitungsgerätes gemäß Fig. 1.
Fig. 4 zeigt fünf verschiedene Varianten, die verschiedene Möglichkeiten zur Ausgestaltung der hydraulischen Verschaltung der Zugdeichsel- und Fahrwerkzylinder verdeutlichen.

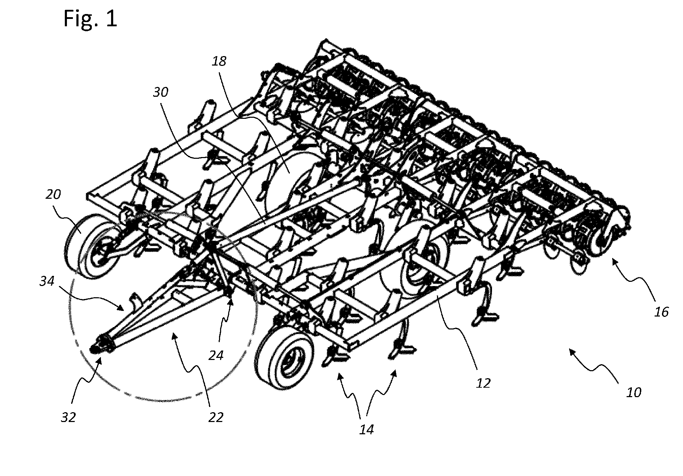

Für gleiche oder gleich wirkende Elemente der Erfindung werden in den Figuren 1 bis 4 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

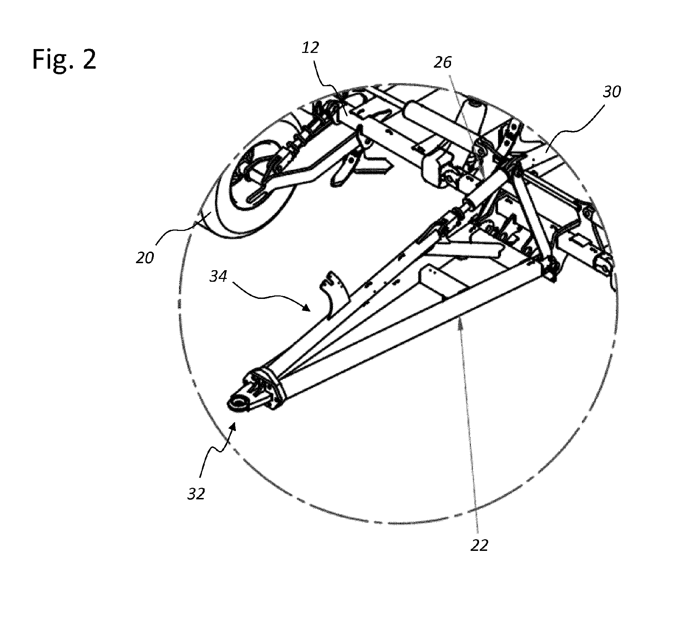

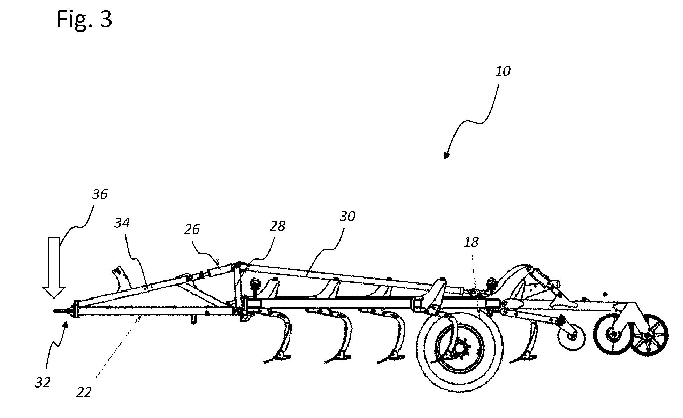

Anhand der schematischen Perspektivdarstellungen der Figuren 1 und 2 und der schematischen Seitenansicht der Fig. 3 sollen der Aufbau und die grundsätzliche Funktionsweise eines Ausführungsbeispiels eines erfindungsgemäßen gezogenen landwirtschaftlichen Gerätes verdeutlicht werden. Das landwirtschaftliche Gerät wird durch ein Bodenbearbeitungsgerät 10 repräsentiert, das einen Rahmen 12 mit einer Mehrzahl daran angeordneter, ggf. verstellbarer Zinken 14 sowie heckseitig mehrere Reihen von Packerelementen 16 aufweisen kann. Da das Bodenbearbeitungsgerät 10 nicht an einer hier nicht dargestellten Zugmaschine aufgesattelt sein soll, sondern ausschließlich gezogen wird, verfügt es über ein höhenverstellbares Fahrwerk 18 und vordere Stützräder 20. Während die vorderen Stützräder 20 in Zusammenwirkung mit den hinteren Packerelementen 16 die Tiefenführung bei der Feldfahrt ermöglichen und zu diesem Zweck mechanisch oder hydraulisch in der Höhe verstellbar sein können, dienen die hinteren Räder des Fahrwerks 18 dem Anheben des gesamten Geräts 10 für die Straßenfahrt oder dem Absenken für die Feldfahrt.

So sind die hinteren Räder des Fahrwerks 18 höhenverstellbar am Rahmen 12 angeordnet und tragen das Bodenbearbeitungsgerät 10 zumindest in Straßenfahrt unter Wahrung eines ausreichenden Abstandes der Zinken 14 und Packerelemente 16 von der Straßenoberfläche. Für die Feldfahrt können zumindest die hinteren Stützräder 18 so weit abgesenkt werden, dass eine gewünschte Bodenbearbeitungstiefe durch entsprechendes Eintauchen der Zinken 14 und heckseitigen Packerelemente 16 erreicht werden kann. Die hinteren Stützräder bilden somit das eigentliche Fahrwerk 18, das für die Straßenfahrt unverzichtbar ist.

Die vorderen Stützräder 20 sind dagegen nicht unverzichtbar, da das Bodenbearbeitungsgerät 10 prinzipiell auch als aufgesatteltes Gerät ausgebildet sein könnte, das sich über die Deichsel 22 am Zugfahrzeug abstützen könnte. Wahlweise kann das durch die hinteren Räder gebildete Fahrwerk 18 auch als zusätzliche Tiefenführung bei der Feldfahrt genutzt werden, wenn bspw. keine Packerelemente 16 am Heck des Geräts 10 vorhanden sind.

Das Fahrwerk 18 kann aber bei der Feldfahrt auch komplett eingezogen, d.h. vom Boden abgehoben sei, so dass die Arbeitstiefe des Bodenbearbeitungsgeräts 10 ausschließlich über die höhenverstellbaren vorderen Stützräder 20 und die hinteren Packerelemente 16 definiert wird. Je nach Ausstattung können sowohl die vorderen Stützräder 20 als auch die heckseitigen Packerelemente 16 hydraulisch oder mechanisch in der Höhe verstellbar sein. Sofern keine Packerelemente 16 vorhanden sind, kann die Tiefenführung bei der Feldfahrt der Maschine 10 ggf. auch über das höhenverstellbare Fahrwerk 18 erfolgen.

Die vorderen Stützräder 20 sind frontseitig am Rahmen 12 angeordnet (nicht dargestellt in Fig. 3), wo sich auch eine Zugdeichsel 22 zur Ankoppelung an das Zugfahrzeug befindet. Die Zugdeichsel 22 ist gelenkig am Rahmen 12 angeordnet und kann um eine Querachse 24 verschwenkt werden. Die annähernd horizontal liegende Zugdeichsel 22 ist mit einem Zugdeichselzylinder 26 gekoppelt, der sich an einem vertikalen Rahmensteg 28 abstützt, der sich wiederum an einer Stützstrebe 30 an einem hinteren Rahmenbereich des Rahmens 12 des Bodenbearbeitungsgerätes 10 abstützt. Der vertikale Rahmensteg 28 und die in spitzem Winkel zur Horizontalen verlaufende Stützstrebe 30 bilden ein rechtwinkeliges Dreieck, das als Gegenlager für die Zugdeichsel 22 und den daran angelenkten Zugdeichselzylinder 26 fungiert. Der Zugdeichselzylinder 26 kann sich je nach Länge in Nähe der vorderen Zugöse 32 der Zugdeichsel 26 abstützen. Da der Zylinder 26 jedoch keine sehr großen Hübe ausführen muss, ist er im gezeigten Ausführungsbeispiel an einem starren Stützdreieck 34 angelenkt, das an der Oberseite der Zugdeichsel 26 abragt und im Wesentlichen nur dazu dient, ein stabiles Widerlager für den sich am Rahmen 12 abstützenden Zugdeichselzylinder 26 zu bilden.

Die mit der hydraulisch verstellbaren Zugdeichselanlenkung zu erreichende Traktionsverbesserung eines Zugfahrzeuges einer Zugkombination mit dem angehängten landwirtschaftlichen Bodenbearbeitungsgerät 10 lässt sich durch folgendes Prinzip bzw. durch folgende hydraulische Schaltung zwischen dem hydraulisch in der Höhe verstellbaren Fahrwerk mit den Stützrädern 18 des gezogenen Bodenbearbeitungsgerätes 10 und dem an der Zugdeichsel 22 angeordneten Zugdeichselzylinder 26 erzielen. Dabei ist der Zugdeichselzylinder 26 hebenseitig ständig über alle Zyklen (Heben und Absenken des Höhenniveaus des Rahmens 12) druckbeaufschlagt. Dadurch resultiert eine dauerhafte Kraft hebenseitig, die das Gerät 10 heben will. Gleichzeitig wird durch die auf die vordere Zugöse 32 wirkende Kraft 36 nach unten dauerhaft Gewicht auf das Zugfahrzeug übertragen. Diese dauerhafte Kraft 36, die hebenseitig wirkt, ist normalerweise auf ein festgelegtes Maximum eingestellt, um gegen diese Kraft 36 das Gerät 10 bedarfsweise mit einer höheren Kraft senkenseitig absenken zu können. Diese Kräfte können durch Wahl der Zylinderverhältnisse und/oder Druckeinstellungen bestimmt werden. Dadurch, dass die Kraft beim Senken die dauerhaft eingestellte Kraft auf der Hebenseite übersteigt, kann das Gerät 10 auch abgesenkt werden, ggf. bei einer sogar negativen resultierenden Stützlast. Die hydraulische Druckbeaufschlagung auf der sog. Senkenseite erfolgt, um die Zugdeichsel 22 abzusenken; danach wird das Steuergerät des Zugfahrzeuges für die Feldfahrt bzw. die Arbeitsfahrten drucklos geschaltet. Dies lässt sich mit nur einem Steuergerät erreichen, das eine sog. "Einhebelbedienung" ermöglicht, ohne dass für die Steuerungseinstellungen ein zweites Steuergerät erforderlich wäre.

Besonders vorteilhaft an der erfindungsgemäßen hydraulischen Koppelung des Zugdeichselzylinders 26 mit den höhenverstellbaren Fahrwerkszylindern (nicht dargestellt) ist, dass die Zugdeichsel 22 in Arbeitsposition im Feld entlastet ist, so dass die Zugdeichsel 22 in Arbeitsposition im Feld weitgehend keine Tiefenführungsfunktion des Gerätes 10 übernehmen muss. Gleichzeitig sind die vorderen Stützräder 20 bei Feldfahrt weitgehend entlastet, was sich begünstigend auf ihre Haltbarkeit sowie auf die Lebensdauer ihrer Aufhängungen auswirkt, da diese Teile geringen mechanischen Belastungen unterworfen sind.

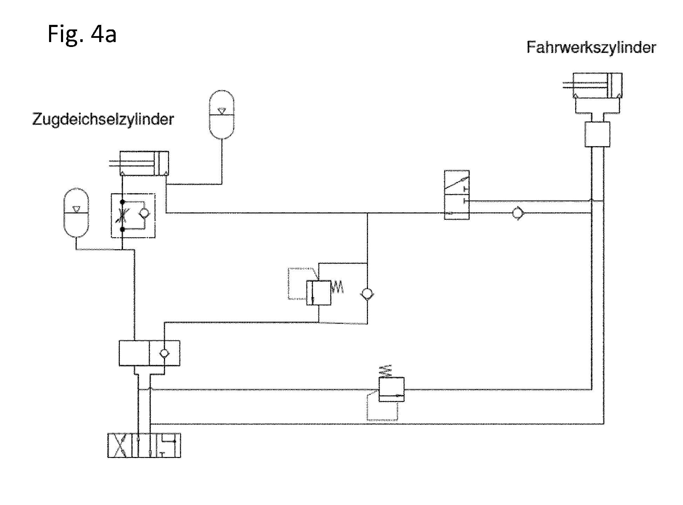

Die Schaltbilder der Figuren 4a bis 4e zeigen insgesamt fünf verschiedene Varianten, die jeweils alternative Möglichkeiten zur Ausgestaltung der hydraulischen Verschaltung der Zugdeichsel- und Fahrwerkzylinder verdeutlichen. Allen Schaltungen ist gemeinsam, dass die Hebenseite des Zugdeichselzylinders dauerhaft mit hydraulischem Druck beaufschlagt wird, während zum Absenken der Zugdeichsel ein erhöhter hydraulischer Druck auf die Gegenseite des doppelt wirkenden Zylinders aufgebracht wird. Der Fahrwerkszylinder ist lediglich symbolisch zu verstehen, da in der Realität normalerweise vier gleich wirkende Zylinder zum Heben und Senken aller vier Räder 18 und 20 vorgesehen sind. Wie oben erwähnt, sind die vorderen Stützräder 20 und die das Fahrwerk 18 bildenden hinteren Räder normalerweise nicht gemeinsam verstellbar, da die übliche Einstellung für die Feldfahrt ein komplettes Anheben des meist nur für die Straßenfahrt benötigten Fahrwerks 18 vorsieht, während die vorderen Stützräder 20 für die variable Einstellung der Arbeitstiefe des Bodenbearbeitungsgeräts 10 benötigt werden.

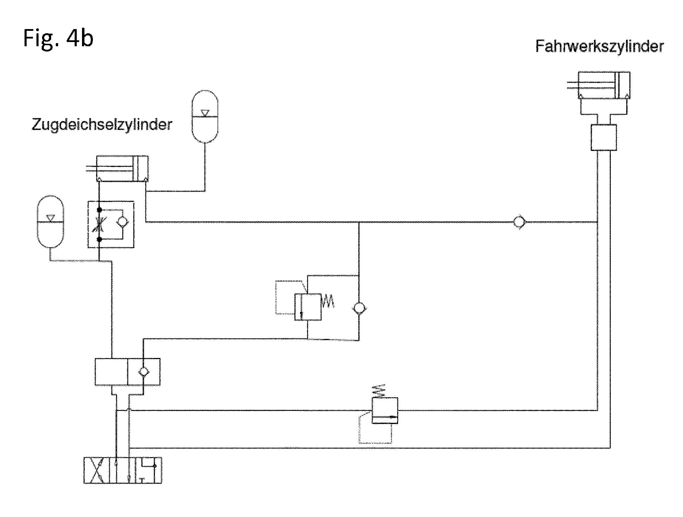

Die Fig. 4a verdeutlicht eine Ausbaustufe der Schaltung, die eine optimale Funktionalität bietet, um neben der Sicherstellung der gewünschten Funktionalität eine Beeinflussung der Hubgeschwindigkeiten und der Hubreihenfolge ermöglichen zu können. Die Fig. 4b zeigt eine Variante, bei der gegenüber der Variante der Fig. 4a ein Absperrhahn zum Fahrwerk weggelassen wurde. Die die dauerhafte Druckbeaufschlagung der Hebenseite des Zugdeichselaushubzylinders 26 ist mit dieser Schaltungsvariante nicht mehr jederzeit deaktivierbar.

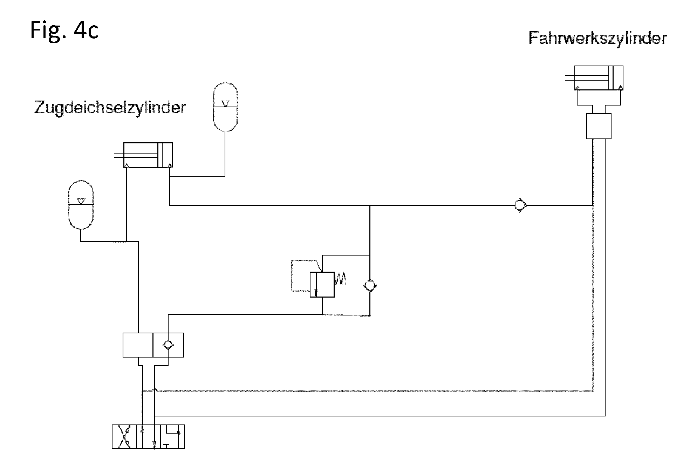

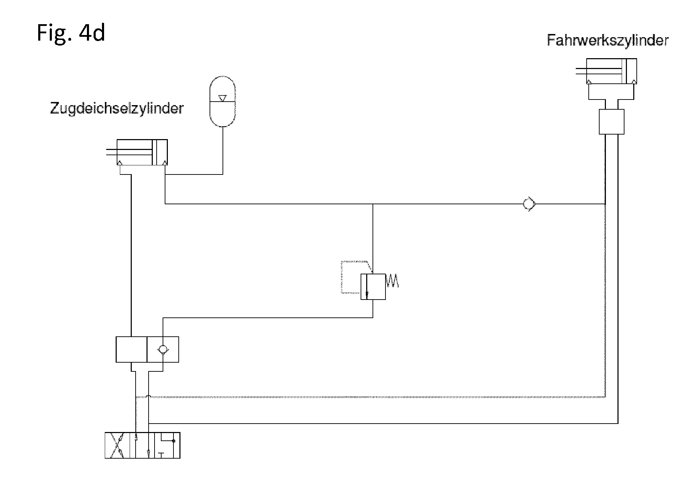

Bei der Variante der Fig. 4c wurde das Druckfolgeventil zwischen der Zugdeichsel und dem Fahrwerk sowie ein Drosselrückschlagventil vor dem Zugdeichselzylinder weggelassen, was dem System noch immer seine Grundfunktionen belässt. Bei der Variante der Fig. 4d wurde auf einen Druckspeicher an der Senkenseite des Zugdeichselzylinders 26 verzichtet.

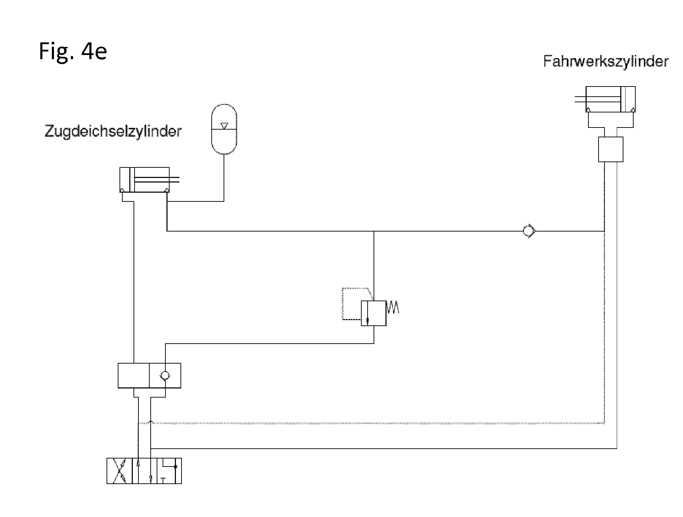

Die Fig. 4e zeigt schließlich eine Schaltungsvariante, bei der die hydraulische Ansteuerung des Zugdeichselzylinders 26 vertauscht wurde; der Zugdeichselzylinder muss hierbei so eingebaut werden, dass er die gewünschte Druckwirkung auf die Zugdeichsel 22 weiterhin ausüben kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Bodenbearbeitungsgerät
- 12: Rahmen
- 14: Zinken
- 16: Packerelemente
- 18: Fahrwerk, hintere Stützräder
- 20: vordere Stützräder
- 22: Zugdeichsel
- 24: Querachse
- 26: Zugdeichselzylinder
- 28: Rahmensteg
- 30: Stützstrebe
- 32: Zugöse
- 34: Stützdreieck
- 36: Stützkraft

## Patentansprüche

1. Gezogenes landwirtschaftliches Gerät (10) mit einem Fahrwerk und einer Zugdeichsel (22), welche jeweils mit hydraulischen Aushubvorrichtungen zum Heben und Senken des Gerätes (10) ausgestattet sind, wobei die Zugdeichsel (22) mit dem Zugfahrzeug über dessen Unterlenker und/oder über einen Anhängepunkt verbindbar oder koppelbar ist, wobei das Gerät (10) in einem vorderen, zum Zugfahrzeug bzw. der Zugdeichsel (22) gerichteten Bereich Stützeinrichtungen zum Einhalten eines vorgebbaren und/oder variablen Abstandes zur Bodenoberfläche aufweist, und wobei die Zugdeichsel (22) mit dem Gerät (10) über wenigstens ein Gelenk (24) und die davon beabstandete hydraulische Aushubvorrichtung (26) verbunden ist, die in einer Arbeitsposition im Feld ein(e) den Koppelpunkt (32) zum Zugfahrzeug belastendes Moment und/oder belastende Kraft (36) erzeugt, indem eine Hebenseite der Aushubvorrichtung (26) der Zugdeichsel (22) dauerhaft, insbesondere während Anhebe- und Absenk-Zyklen mit hydraulischem Druck beaufschlagt ist.

2. Landwirtschaftliches Gerät nach Anspruch 1, bei dem die dauerhafte Druckbeaufschlagung der Hebenseite des Zugdeichselaushubzylinders (26) bei jedem Heben- oder Senken-Zyklus automatisch hydraulisch druckbeaufschlagt wird.

3. Landwirtschaftliches Gerät nach Anspruch 1 oder 2, bei dem die hydraulische Ansteuerung des Zugdeichselzylinders (26) mit einer Schlepperhydraulik des Zugfahrzeuges gekoppelt und/oder durch dessen Steuergerät für eine Einhebelbedienung angesteuert ist.

4. Landwirtschaftliches Gerät nach einem der Ansprüche 1 bis 3, bei dem die Höhe der dauerhaften Druckbeaufschlagung der Hebenseite manuell einstellbar ist.

5. Landwirtschaftliches Gerät nach einem der Ansprüche 1 bis 4, bei dem die dauerhafte Druckbeaufschlagung der Hebenseite automatisch durch vorgebbare Parameter und daraus resultierende Regelkreise einstellbar ist.

6. Landwirtschaftliches Gerät nach einem der Ansprüche 1 bis 5, bei dem die dauerhafte Druckbeaufschlagung der Hebenseite des Zugdeichselaushubzylinders (26) jederzeit deaktivierbar ist.

7. Landwirtschaftliches Gerät nach einem der Ansprüche 1 bis 6, bei dem der Fahrwerkszylinder mit einem hydraulischen Heben/Senken-Kreis des druckbeaufschlagten Zugdeichselzylinder (26) hydraulisch verbunden ist, ohne dabei hebenseitig dauernd druckbeaufschlagt zu sein.

8. Landwirtschaftliches Gerät nach einem der Ansprüche 1 bis 7, bei dem beim Senken der Zugdeichsel (22) eine höhere Kraft auf der Senkenseite des Zugdeichselzylinders (26) aufzugbringen ist als die dauerhaft eingestellte Kraft der Hebenseite.

9. Landwirtschaftliches Gerät nach einem der Ansprüche 1 bis 8, bei dem der Zugdeichselaushubzylinder (26) bezüglich der Heberichtung in beliebiger Richtung als Druck- oder als Zugzylinder eingebaut sein kann.

10. Landwirtschaftliches Gerät nach einem der Ansprüche 1 bis 9, das Bodenbearbeitungseinrichtungen wie Packerelemente (16), Zinkeneggen (14) o. dgl. aufweist.
